# DEMANDE DE BREVET EUROPEEN

(11) **EP 1 211 866 A1**
(43) Date de publication de la demande: **05.06.2002**
(21) Numéro de dépôt: 01204429.3
(22) Date de dépôt: 20.11.2001
(51) Int. Cl.: H04L 29/06, G06F 17/30

(54) **Procédé de téléchargement de fichiers**

(30) Priorité: 30.11.2000 FR 0015536
(71) Demandeur: Koninklijke Philips Electronics N.V., 5621 BA Eindhoven (NL)
(72) Inventeur: Breut, Pascal, c/o Société Civile S.P.I.D., 75008 Paris (FR); Thauvin, Philippe, c/o Société Civile S.P.I.D., 75008 Paris (FR)
(74) Mandataire: Chaffraix, Jean

(57) **Abrégé**

Ce système de transmission de données est formé par, au moins, une station de radio mobile (1) comportant un explorateur de site (2) et par, au moins, un serveur d'informations de type WAP (20) comportant une liste de noms de fichiers accessibles (24). A ces noms de fichiers accessibles est associée une adresse de type URL qui définit :
- une préparation de l'activation de ladite station pour une application, (dev)
- une application (appli.xxx),
- une adresse du genre IP pour définir l'adresse du serveur du fichier accessible (Iphx),
- le nom du fichier accessible (filnamex),
- les paramètres éventuels pour ce fichier (parameter).

Par l'invention, on s'affranchit des contraintes des dispositifs de filtrage du monde Internet, de sorte que l'on peut accéder via internet à des fichiers pour un mobile WAP.

Application navigation WAP

## Description

L'invention concerne un système de transmission de données formé par, au moins, une station comportant un explorateur de site et par, au moins, un serveur d'informations comportant un fichier d'accès donnant une liste de noms de fichiers accessibles.

L'invention concerne aussi une station convenant à un tel système.

L'invention concerne encore un procédé de téléchargement de données mis en oeuvre dans un tel système.

L'invention trouve d'importantes applications notamment dans le domaine des appareils de radiotéléphonie mobiles utilisant les possibilités du protocole WAP (Wireless Application Protocol). On trouvera toutes indications sur ce protocole au site internet suivant : http://www.wapforum.org.
ou plus précisément à :

### http://www.wapforum.org/what/copyright.htm

Ce protocole permet de télécharger différents objets d'un serveur, par exemple des mélodies, des images « jpeg », des icônes, des scénarios de jeux, des films VGX (voir le document de brevet déposé en Grande-Bretagne sous le numéro 0013764.6 le 07.06.2000), des logiciels de mise à jour pour le fonctionnement de l'appareil mobile, des logiciels d'applications tels que organiseur, éditeur, etc... et aussi des fichiers son tels que MP3.

Le problème qui survient dans ce genre d'application est que le serveur de données se trouve dans le monde internet alors que l'appareil de radio phonie mobile est en principe desservi par le réseau WAP. Il y a dans ce réseau WAP, un dispositif de filtrage qui filtre les requêtes émanant de tous les appareils radio mobiles qui s'y connectent. Il peut donc arriver qu'une requête ne soit pas satisfaite.

La présente invention propose un système du genre mentionné dans le préambule qui permet d'accéder à des fichiers du monde Internet de façon compatible avec les systèmes de filtrage de ce monde.

Pour cela, un tel système est remarquable en ce qu'à au moins un desdits noms de fichiers accessibles est associée une adresse de type URL qui définit :
- une préparation de l'activation de ladite station pour une application, (devi)
- une application (application.xxx),
- une adresse du genre IP pour définir l'adresse du serveur du fichier accessible,
- le nom du fichier accessible,
- les paramètres éventuels pour ce fichier.

L'idée de l'invention consiste donc à utiliser un format spécial d'adresse qui permet de définir au niveau du dispositif de filtrage, les requêtes à satisfaire.

La description suivante, faite en regard des dessins ci-annexés, le tout donné à titre d'exemples non limitatifs fera bien comprendre comment l'invention peut être réalisée. Sur les dessins :
La figure 1 montre un système conforme à l'invention,
La figure 2 montre l'organisation d'une page de consultation conforme à l'invention.

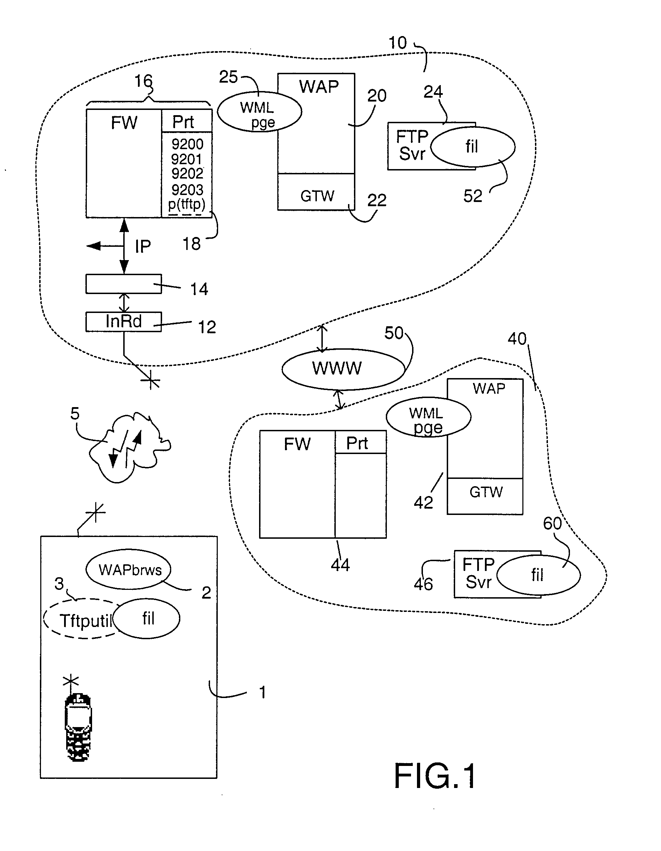

A la figure 1, on a représenté un système conforme à l'invention. La référence 1 indique une station de téléphonie mobile munie des moyens pour effectuer du trafic selon la norme WAP précitée. A cet effet la station mobile 1 comporte un navigateur WAP 2 et autres programmes utilitaires dont, entre autres, un programme de transfert de fichier 3 répondant à la norme sécurisée « TFTP ».

Il va de soi que, bien que pour des raisons de clarté, une seule station soit montrée sur la figure 1, le système en comporte une multitude. Cette station 1 est raccordée au réseau de radio-mobile 5. Ce réseau permet un raccord sur un serveur WAP 20 qui fait partie de l'ensemble de services 10 appartenant à l'opérateur, gestionnaire du réseau 5, par exemple. Cet ensemble comporte un dispositif de connexion 12 sur lequel vient se connecter en premier lieu la station 1 et assure l'interface habituelle des signaux. Un routeur 14 permet d'aiguiller les différentes requêtes formulées à partir des stations mobiles raccordées au réseau. Au niveau de ce routeur 14 un lien IP (Internet Protocol), affecté à la station 1 est créé. Certaines requêtes sont analysées par un dispositif de filtrage « coupe feu » 16 qui est appelé en littérature anglo-saxonne « Fire wall ». D'autres sont envoyées ailleurs. Le dispositif 16 rejète toutes les requêtes dont le port mentionné ne correspond pas à un de ceux enregistrés dans liste 18. Les requêtes admises peuvent alors être dirigées sur le serveur WAP 20 en passant par le dispositif d'accès (Gateway) 22. Sur le serveur 20, on peut trouver une page écrite en langage WML. Ce serveur 20 peut donner accès à un serveur 24 de téléchargement de fichiers tftp correspondant au programme tftp précité.

Il est aussi possible de se raccorder à d'autres sites WAP ne faisant pas partie du système de l'opérateur. Sur la figure 1, on a représenté par la référence 40 un autre site orienté WAP comportant, entre autres, un serveur WAP 42 auquel sont rattachés, notamment, un dispositif de filtrage 44 et un serveur tftp 46. On peut aussi accéder à des serveurs en utilisant le réseau internet portant, sur la figure, la référence 50.

Selon l'invention, on dispose, au niveau du serveur WAP 20, de pages qui sont de type WML, de préférence, et qui contiennent les adresses de fichiers susceptibles d'être utilisés par la station mobile 1 et modifiées conformément aux mesures de l'invention.

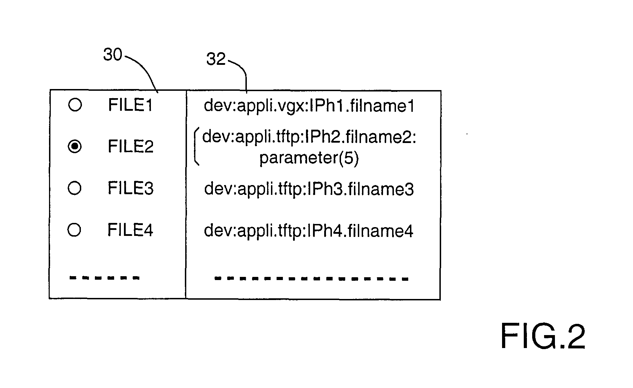

La figure 2 montre comment est organisée une page. A chaque fichier dont le nom est donné dans une colonne 30 est associée une adresse de type URL, ceci est montré dans une autre colonne 32 pour des raison de clarté, mais, en fait, cette adresse n'est pas forcément visible à l'utilisateur. Cette adresse est constituée de la façon suivante :
Dev :appli.xxx.IPhost : « file name » :param dans cette adresse :
   Dev : est le préambule de l'adresse, en pratique c'est « device » qui indique qu'il faut charger, au niveau de la station mobile 1, l'application dont le nom suit.
   Appli.xxx : spécifie qu'une application est demandée et qu'il faut la charger. Le nom de l'application est donné par « xxx », par exemple si xxx=tftp alors l'application tftp va être chargée dans la station mobile 1.
   IPhost donne l'adresse IP du serveur sur lequel est placé le fichier indiqué ensuite.
   « file name » : donne le nom du fichier convoité.
   Param : est la liste des paramètres pour le fichier ou l'application convoité.

Une autre mesure de l'invention consiste à compléter au niveau du dispositif de filtrage le port de l'application. Ceci est indiqué sur la figure 1 par la référence : p(tftp) à la colonne Prt. Les autres ports indiqués correspondent aux différentes phases ou aux différents mode de connexions de la station mobile.

Le fonctionnement de l'invention est expliqué pour les cas suivants :

### A - téléchargement d'un fichier.

On se place dans le cas où l'on veut télécharger le fichier 52. Ce fichier 52 est placé sur le disque dur du serveur constituant le site 24. Ce serveur 24 est du type FTP (File Transfert Protocole).
1°) L'utilisateur agit sur son navigateur WAP et explore le site WAP 20. Il consulte la page 25 qui donne la référence du fichier 52.
2°) Cette page 25, avec les adresses URL définies ci-dessus, est téléchargée dans la station mobile 1.
3°) L'utilisateur choisit, à l'aide de son explorateur 2, un des fichiers qui lui sont présentés : par exemple comme montré sur la figure 2 , le fichier dont le nom est: « FILE2 ».
4)° Comme les caractères « tftp » situés après « appli » sont décodés, l'adresse de la colonne 32 en regard de « FILE2 » est fournie à l'application qui gère ce protocole tftp.
5°) l'application qui gère tftp démarre une session pour l'adressage IP donnée dans l'adresse URL définie par l'invention pour requérir le transfert du fichier.
6°) Le routeur 14 reçoit cette requête qui est accompagnée de l'adresse IP conforme à l'invention et l'adresse au serveur 24 directement. Alors le transfert du fichier convoité s'effectue en direction de la station mobile 1.
7°) La station 1 reçoit l'en-tête du chargement, ce qui démarre l'enregistrement du fichier à l'intérieur du mobile.
8°) N'importe quelle application contenue dans la station peut utiliser alors le fichier ainsi transmis.

Il va de soi que si le fichier est un fichier 60 situé dans le site 40, le fichier sera accédé et transféré en utilisant le réseau internet 50.

### B-Téléchargement de fichiers exécutables.

Le processus est le même que celui décrit ci-dessus. Cependant il y aune différence qui provient du contenu du fichier. Cette fois-ci, on n'a pas affaire à un fichier qui doit être interprété, mais à une liste d'instructions qui doivent être exécutées par le processeur. Une variante possible consiste à transmettre ce fichier sous forme compactée.

### C - Production de sons de musique ou de voix pendant une session WAP.

Dans ce système, le mécanisme de téléchargement est semblable à celui qui a déjà été vu. La différence provient du fait que la station doit utiliser le fichier pendant le téléchargement.

## Revendications

1. Système de transmission de données formé par, au moins, une station comportant un explorateur de site et par, au moins, un serveur d'informations comportant un fichier d'accès donnant une liste de noms de fichiers accessibles, **caractérisé en ce qu'**à au moins un desdits noms de fichiers accessibles est associée une adresse de type URL qui définit :
- une préparation de l'activation de ladite station pour une application, (devi)
- une application (application.xxx),
- une adresse du genre IP pour définir l'adresse du serveur du fichier accessible,
- le nom du fichier accessible,
- les paramètres éventuels pour ce fichier.

2. Système de transmission selon la revendication 1 dans lequel le serveur comporte un dispositif de coupe feu, sélectionnant des requêtes comportant des indications de ports contenues dans une liste de ports admis, **caractérisé en ce que** les ports desdites applications sont insérés dans la liste des ports admis par ledit dispositif coupe feu.

3. Système de transmission selon la revendication 1 ou 2, **caractérisé en ce qu'**il est adapté au système WAP.

4. Station convenant à un système selon la revendication 1 ou 2 ou 3, **caractérisée en ce qu'**elle comporte un explorateur de site et des moyens pour activer les applications en fonction de ladite adresse.

5. Station selon la revendication 4, **caractérisée en ce que** ledit explorateur correspond au système WAP.

6. Procédé de transmission de données impliquant un serveur d'informations et une station demandant des informations dudit serveur mis en oeuvre dans un système selon l'une des revendications 1 à 3, **caractérisé en ce qu'**il comporte les étapes suivantes :
- activation de l'explorateur de site de la station,
- connexion à un site par l'intermédiaire d'un dispositif coupe feu,
- accès à un fichier d'accès avec transfert dans ladite station,
- déclenchement d'une application définie par un code d'adressage associée à un nom donné par ledit fichier d'accès en fonction du choix de l'utilisateur,
- accès au fichier déterminé par ledit code d'adressage en utilisant l'adresse donnée aussi par ledit code d'adressage,
- mise en route de ladite application.
